(19) Europäisches Patentamt
European Patent Office
Office européen des brevets

(11) EP 1 239 462 B1

(12) **EUROPEAN PATENT SPECIFICATION**

(45) Date of publication and mention
of the grant of the patent:
**26.05.2004 Bulletin 2004/22**

(51) Int Cl.⁷: **G10L 15/28**, G10L 15/20

(21) Application number: **02251572.0**

(22) Date of filing: **06.03.2002**

(54) **Distributed speech recognition system and method**

Verfahren und Vorrichtung zur verteilten Spracherkennung

Procédé et dispositif de reconaissance répartie de la parole

(84) Designated Contracting States:
**AT BE CH CY DE DK ES FI FR GB GR IE IT LI LU MC NL PT SE TR**

(30) Priority: **08.03.2001 JP 2001065383**

(43) Date of publication of application:
**11.09.2002 Bulletin 2002/37**

(73) Proprietor: **CANON KABUSHIKI KAISHA Tokyo (JP)**

(72) Inventors:
• **Kosaka, Tetsuo, c/o Canon Kabushiki Kaisha Tokyo (JP)**
• **Yamamoto, Hiroki, c/o Canon Kabushiki Kaisha Tokyo (JP)**

(74) Representative:
**Beresford, Keith Denis Lewis et al
BERESFORD & Co.
16 High Holborn
London WC1V 6BX (GB)**

(56) References cited:
**US-B1- 6 223 157**

• **RAMASWAMY G N ET AL: "Compression of acoustic features for speech recognition in network environments" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12 May 1998 (1998-05-12), pages 977-980, XP010279302 ISBN: 0-7803-4428-6**
• **HANSEN J H L ET AL: "ICARUS: Source generator based real-time recognition of speech in noisy stressful and Lombard effect environments" SPEECH COMMUNICATION, ELSEVIER SCIENCE PUBLISHERS, AMSTERDAM, NL, vol. 16, no. 4, 1 June 1995 (1995-06-01), pages 391-422, XP004008595 ISSN: 0167-6393**

## Description

FIELD OF THE INVENTION

This invention relates to a speech recognition system, apparatus, and their methods.

BACKGROUND OF THE INVENTION

In recent years, along with the advance of the speech recognition technique, attempts have been made to use such technique as an input interface of a device. When the speech recognition technique is used as an input interface, it is a common practice to introduce an arrangement for a speech process in the device, to execute speech recognition in that device, and to handle the speech recognition result as input operation to the device.

On the other hand, recent development of compact portable terminals allows compact portable terminals to implement many processes. However, such compact portable terminal cannot comprise sufficient input keys due to its size limitation. For this reason, a demand has arisen for using the speech recognition technique for operation instructions that implement various functions.

As one implementation method, a speech recognition engine is installed in the compact portable terminal itself. However, such compact portable terminal has limited resources such as a memory, CPU, and the like, and cannot be often installed with a high-performance recognition engine. Hence, a client-server speech recognition system has been proposed. In this system, a compact portable terminal is connected to a server via, e.g., a wireless network, a process that requires low processing cost of the speech recognition process is executed on the terminal, and a process that requires a large processing volume is executed on the server.

In this case, since the data size to be transferred from the terminal to the server is preferably small, it is a common practice to compress (encode) data upon transfer. As for the encoding method for this purpose, an encoding method suitable for sending data associated with speech recognition has been proposed in place of a general audio encoding method used in a portable telephone, see e.g. Ramaswamy et. al.: "Compression of Acoustic Features for Speech Recognition in Network Environments, ICASSP'98, pp. 977-980.

Encoding suitable for speech recognition, which is used in the aforementioned client-server speech recognition system adopts a method of calculating feature parameters of speech, and then encoding these parameters by scalar quantization, vector quantization, or subband quantization. In such case, encoding is done without considering any acoustic feature upon speech recognition.

However, when speech recognition is used in a noisy environment, or when the characteristics of a microphone used in speech recognition are different from general ones, an optimal encoding process differs. For example, in case of the above method, since the distribution of feature parameters of speech in a noisy environment is different from that of feature parameters of speech in a silent environment, it is preferable to adaptively change the quantization range accordingly.

Since the conventional method encodes without considering a change in acoustic feature, the recognition rate deteriorates, and a high compression ratio cannot be set upon encoding in, e.g., a noisy environment.

SUMMARY OF THE INVENTION

According to a first aspect, the present invention provides a speech recognition system comprising:

input means for inputting acoustic information;
analysis means for analyzing the acoustic information input by said input means to acquire feature quantity parameters;
first holding means for obtaining and holding initial setup information for encoding on the basis of the feature quantity parameters obtained by said analysis means;
second holding means for holding processing information for a speech recognition process in accordance with the initial setup information for encoding;
conversion means for compression-encoding the feature quantity parameters obtained via said input means and said analysis means on the basis of the initial setup information for encoding; and
recognition means for executing speech recognition on the basis of the processing information for speech recognition held by said second holding means, and the feature quantity parameters compression-encoded by said conversion means.

According to another aspect, the present invention provides a speech recognition method comprising:

an input step of inputting acoustic information;
an analysis step of analyzing the acoustic information input in the input step to acquire feature quantity parameters;
a first holding step of obtaining initial setup information for encoding on the basis of the feature quantity parameters obtained in the analysis step, and storing the information in first storage means;
a second holding step of holding, in second storage means, processing information for a speech recognition process in accordance with the initial setup information for encoding;
a conversion step of executing speech recognition on the basis of the processing information for speech recognition held in said second storage means in the second holding step, and the feature quantity parameters compression-encoded in the conversion step.

According to another aspect, the present invention provides an information processing apparatus comprising:

input means for inputting acoustic information;

analysis means for analyzing the acoustic information input by said input means to acquire feature quantity parameters;

holding means for generating and holding initial setup information for compression-encoding on the basis of the feature quantity parameters obtained by said analysis means;

first communication means for sending the initial setup information generated by said holding means to an external apparatus;

conversion means for compression-encoding the feature quantity parameters of the acoustic information obtained via said input means and said analysis means on the basis of the initial setup information; and

second communication means for sending data obtained by said conversion means to the external apparatus.

According to another aspect, the present invention provides an information processing apparatus comprising:

first reception means for receiving initial setup information associated with compression-encoding from an external apparatus;

holding means for holding, in a memory, processing information for speech recognition obtained on the basis of the initial setup information received by said first reception means;

second reception means for receiving compression-encoded data from the external apparatus; and

recognition means for executing speech recognition of the data received by said second reception means using the processing information held in said holding means.

According to another aspect, the present invention provides an information processing method comprising:

an input step of inputting acoustic information;

an analysis step of analyzing the acoustic information input in the input step to acquire feature quantity parameters;

a holding step of generating and holding initial setup information for compression-encoding on the basis of the feature quantity parameters obtained in the analysis step;

a first communication step of sending the initial setup information generated in the holding step to an external apparatus;

a conversion step of compression-encoding the feature quantity parameters of the acoustic information obtained via the input step and the analysis step on the basis of the initial setup information; and

a second communication step of sending data obtained in the conversion step to the external apparatus.

According to another aspect, the present invention provides an information processing method comprising:

a first reception step of receiving initial setup information associated with compression-encoding from an external apparatus;

a holding step of holding, in a memory, processing information for speech recognition obtained on the basis of the initial setup information received in the first reception step;

a second reception step of receiving compression-encoded data from the external apparatus, and

a recognition step of executing speech recognition of the data received in the second reception step using the processing information held in the holding step.

Other features and advantages of the present invention will be apparent from the following description taken in conjunction with the accompanying drawings, in which like reference characters designate the same or similar parts throughout the figures thereof.

**BRIEF DESCRIPTION OF THE DRAWINGS**

The accompanying drawings, which are incorporated in and constitute a part of the specification, illustrate embodiments of the invention and, together with the description, serve to explain the principles of the invention.

Fig. 1 is a block diagram showing the arrangement of a speech recognition system according to the first embodiment;

Fig. 2 is a flow chart for explaining an initial setup process of the speech recognition system of the first embodiment;

Fig. 3 is a flow chart for explaining a speech recognition process of the speech recognition system of the first embodiment;

Fig. 4 is a block diagram showing the arrangement of a speech recognition system according to the second embodiment;

Fig. 5 is a flow chart for explaining an initial setup process of the speech recognition system of the second embodiment;

Fig. 6 is a flow chart for explaining a speech recognition process of the speech recognition system of the second embodiment; and

Fig. 7 shows an example of the data structure of a clustering result table in the first embodiment.

## DETAILED DESCRIPTION OF THE PREFERRED EMBODIMENTS

Preferred embodiments of the present invention will now be described in detail in accordance with the accompanying drawings.

<First Embodiment>

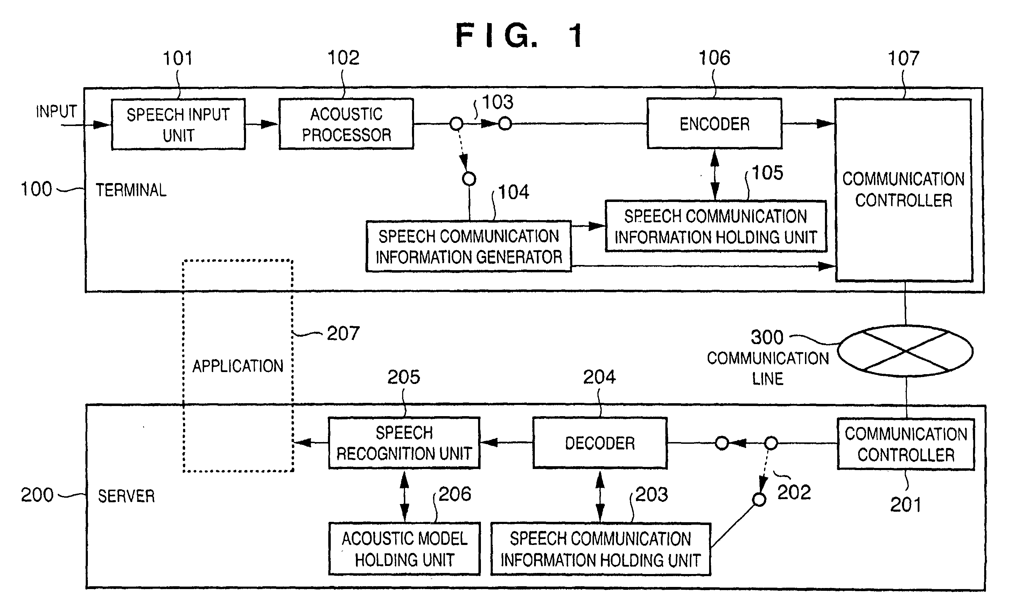

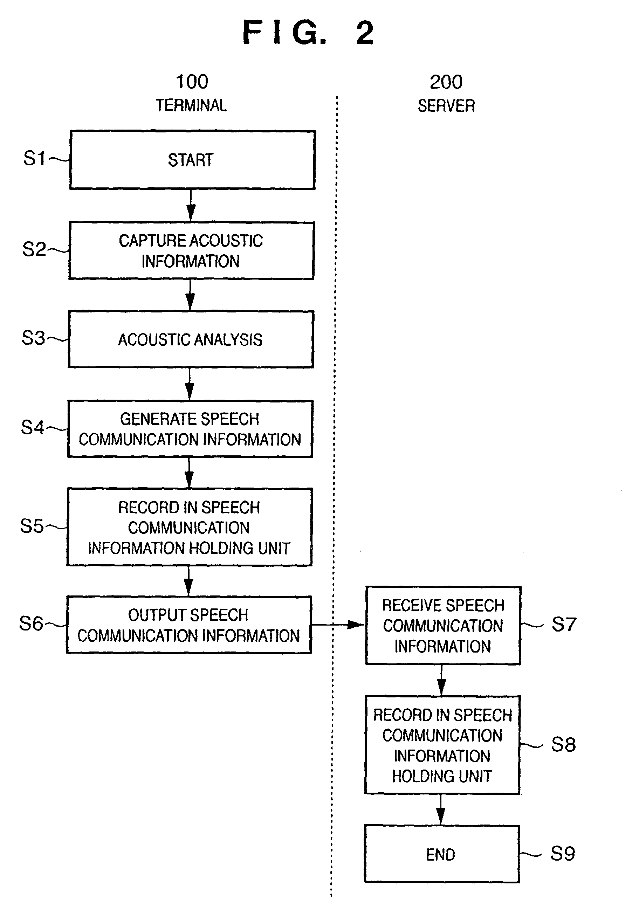

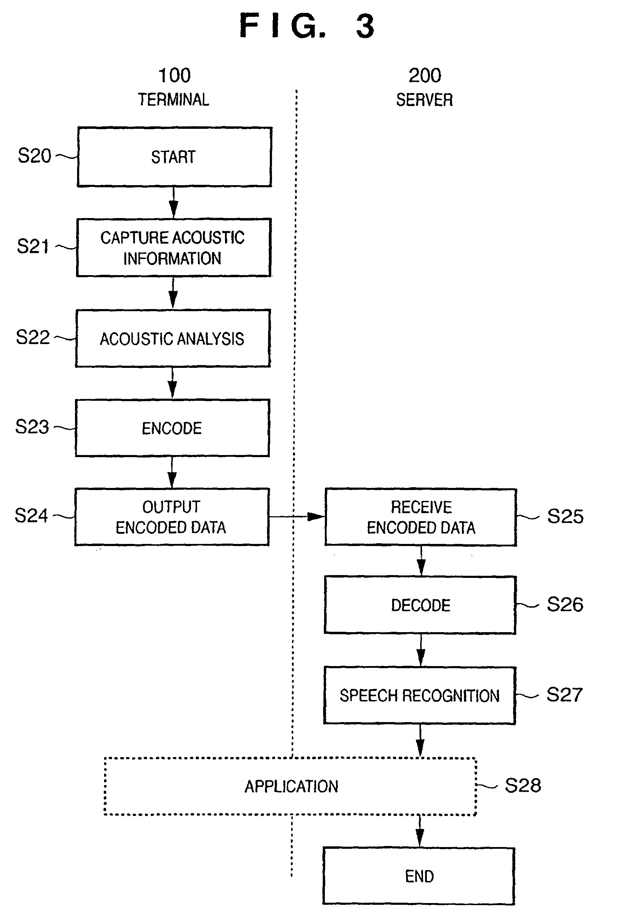

Fig. 1 is a block diagram showing the arrangement of a speech recognition system according to the first embodiment. Figs. 2 and 3 are flow charts for explaining the operation of the speech recognition system shown in the diagram of Fig. 1. The first embodiment will be explained below as well as its operation example while associating Fig. 1 with Figs. 2 and 3.

Referring to Fig. 1, reference numeral 100 denotes a terminal. As the terminal 100, various portable terminals including a portable telephone and the like can be applied. Reference numeral 101 denotes a speech input unit which captures a speech signal via a microphone or the like, and converts it into digital data. Reference numeral 102 denotes an acoustic processor for generating multi-dimensional acoustic parameters by acoustic analysis. Note that acoustic analysis can use analysis methods normally used in speech recognition such as melcepstrum, delta-melcepstrum, and the like. Reference numeral 103 denotes a process switch for switching the data flow between an initial setup process and speech recognition process, as will be described later with reference to Figs. 2 and 3.

Reference numeral 104 denotes a speech communication, information generator for generating data used to encode the acoustic parameters obtained by the acoustic processor 102. In this embodiment, the speech communication information generator 104 segments data of each dimension of the acoustic parameters into arbitrary classes (16 steps in this embodiment) by clustering, and generates a clustering result table using the results segmented by clustering. Clustering will be described later. Reference numeral 105 denotes a speech communication information holding unit for holding the clustering result table generated by the speech communication information generator 104. Note that various recording media such as a memory (e.g., a RAM), floppy disk (FD), hard disk (HD), and the like can be used to hold the clustering result table in the speech communication information holding unit 105.

Reference numeral 106 denotes an encoder for encoding the multi-dimensional acoustic parameters obtained by the acoustic processor 102 using the clustering result table recorded in the speech communication information holding unit 105. Reference numeral 107 denotes a communication controller for outputting the clustering result table, encoded acoustic parameters, and the like onto a communication line 300.

Reference numeral 200 denotes a server for making speech recognition of the encoded multi-dimensional acoustic parameters sent from the terminal 100. The server 200 can be constituted using a normal personal computer or the like.

Reference numeral 201 denotes a communication controller for receiving data sent from the communication controller 107 of the terminal 100 via the line 300. Reference numeral 202 denotes a process switch for switching the data flow between an initial setup process and speech recognition process, as will be described later with reference to Figs. 2 and 3.

Reference numeral 203 denotes a speech communication information holding unit for holding the clustering result table received from the terminal 100. Note that various recording media such as a memory (e.g., a RAM), floppy disk (FD), hard disk (HD), and the like can be used to hold the clustering result table in the speech communication information holding unit 203.

Reference numeral 204 denotes a decoder for decoding the encoded data (multi-dimensional acoustic parameters) received from the terminal 100 by the communication controller 201 by looking up the clustering result table held in the speech communication information holding unit 203. Reference numeral 205 denotes a speech recognition unit for executing a recognition process of the multi-dimensional acoustic parameters obtained by the decoder 204 using an acoustic model held in an acoustic model holding unit 206.

Reference numeral 207 denotes an application for executing various processes on the basis of the speech recognition result. The application 207 may run on either the server 200 or terminal 100. When the application runs on the terminal 100, the speech recognition result obtained by the server 200 must be sent to the terminal 100 via the communication controllers 201 and 107.

Note that the process switch 103 of the terminal 100 switches connection to supply data to the speech communication information generator 104 upon initial setup, and to the encoder 106 upon speech recognition. Likewise, the process switch 202 of the server 200 switches connection to supply data to the speech communication information holding unit 203 upon initial setup, and to the decoder 204 upon speech recognition. These process switches 103 and 202 operate in cooperation with each other. Switching of these switches is done as follows. For example, two different modes, i.e., an initial learning mode and recognition mode, are prepared, and when the user designates the initial learning mode to learn before use of recognition, the process switch 103 switches connection to supply data to the speech communication information generator 104, and the process switch 202 switches connection to supply data to the speech communication information holding unit 203. Upon making recognition in practice, since the user designates the recognition mode, the process switch 103 switches connection to supply data to the encoder 106, and the process switch 202 switches connection to supply data to the decoder 204 in response to that user's designation.

Note that reference numeral 300 denotes a communication line which connects the terminal 100 and server 200, and various wired and wireless communication means can be used as long as they can transfer data.

Note that the respective units of the aforementioned terminal 100 and server 200 are implemented when their CPUs execute control programs stored in memories. Of course, some or all of the units may be implemented by hardware.

The operation in the speech recognition system will be described in detail below with reference to the flow charts of Figs. 2 and 3.

Before the beginning of speech recognition, an initial setup shown in the flow chart of Fig. 2 is executed. In the initial setup, an encoding condition for adapting encoded data to an acoustic environment is set. If this initial setup process is skipped, it is possible to execute encoding and speech recognition of speech data using prescribed values generated based on an acoustic state in, e.g., a silent environment. However, by executing the initial setup process, the recognition rate can be improved.

In the initial setup process, the speech input unit 101 captures acoustic data and A/D-converts the captured acoustic data in step S2. The acoustic data to be input is that obtained when an utterance is made in an audio environment used in practice or a similar audio environment. This acoustic data also reflects the influence of the characteristics of a microphone used. If background noise or noise generated inside the device is present, the acoustic data is also influenced by such noise.

In step S3, the acoustic processor 102 executes acoustic analysis of the acoustic data input by the speech input unit 101. As described above, acoustic analysis can use analysis methods normally used in speech recognition such as melcepstrum, delta-melcepstrum, and the like. As described above, since the process switch 103 connects the speech communication information generator 104 in the initial setup process, the speech communication information generator 104 generates data for an encoding process in step S4.

The data generation method used in the speech communication information generator 104 will be explained below. As for encoding for speech recognition, a method of calculating acoustic parameters, and encoding these parameters by scalar quantization, vector quantization, or subband quantization may be used. In this embodiment, the method used need not be particularly limited, and any method can be used. In this case, a method using scalar quantization will be explained below. In this method, the respective dimensions of the multi-dimensional acoustic parameters obtained by acoustic analysis in step S3 undergo scalar quantization. Upon scalar quantization, various methods are available.

Two examples will be explained below.

1) Method based on LBG:

An LBG method, which is used normally, is used as a clustering method. Data of each dimension of the acoustic parameters are segmented into arbitrary classes (e.g., 16 steps) using the LBG method.

2) Method of assuming model:

Assume that data of the respective dimensions of the acoustic parameters follow, e.g., a Gaussian distribution. A $3\sigma$ range of the entire distribution of each dimension is segmented into, e.g., 16 steps by clustering to have equal areas, i.e., equal probabilities.

Furthermore, the clustering result table obtained by the speech communication information generator 104 is transferred to the server 200 in step S6. Upon transfer, the communication controller 107 of the terminal 100, the communication line, and the communication controller 201 of the server 200 are used, and the clustering result table is transferred to the server.

In the server 200, the communication controller 201 receives the clustering result table in step S7. At this time, the process switch 202 connects the speech communication information holding unit 203 and communication controller 201, and the received clustering result table is recorded in the speech communication information holding unit 203 in step S8.

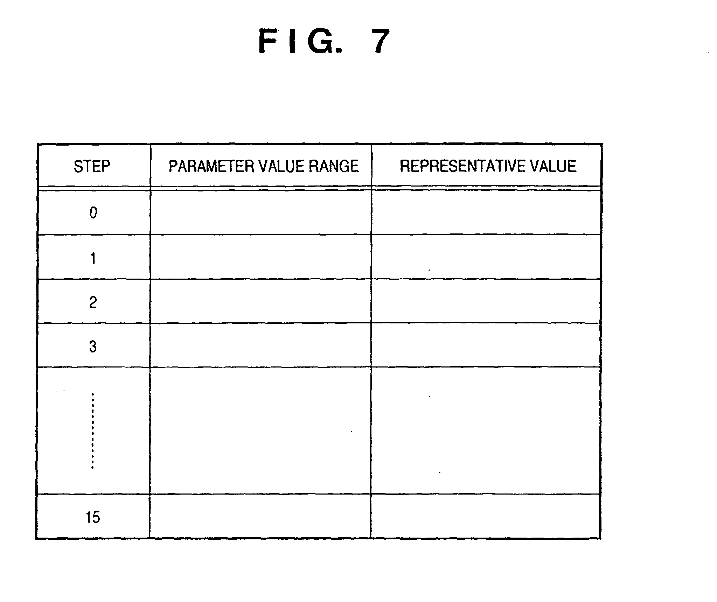

Fig. 7 is a view for explaining the clustering result table. In Fig. 7, clustering to 16 steps is done. A table for encoding shown in Fig. 7 is generated by the aforementioned method (e.g., the LBG method or the like) based on the acoustic parameters input in the initial learning mode. The table shown in Fig. 7 is generated for each dimension of the acoustic parameters, and registers step numbers and parameter value ranges of each dimension in correspondence with each other. By looking up this correspondence between the parameter value ranges and step numbers, the acoustic parameters are encoded using the step numbers. Each step number stores a representative value to be looked up in a decoding process. Note that the speech communication information holding unit 105 may store the step numbers and parameter value ranges, and the speech communication information holding unit 203 may store the step numbers and representative values. In this case, speech communication information sent from the terminal 100 to the server 200 may contain only the correspondence between the step numbers and parameter representative values.

Or the speech communication information generator 104 may generate correspondence between the step numbers and parameter range values, and correspondence between the step numbers and representative values used in the decoding process may be generated by the server 200 (speech communication information holding unit 203).

The process upon speech recognition will be explained below. Fig. 3 is a flow chart showing the flow of the process upon speech recognition.

In speech recognition, the speech input unit 101 captures speech to be recognized, and A/D converts the captured speech data in step S21. In step S22, the acoustic processor 102 executes acoustic analysis. Acoustic analysis can use analysis methods normally used in speech recognition such as melcepstrum, delta-melcepstrum, and the like. In the speech recognition process, the process switch 103 connects the acoustic processor 102 and encoder 106. Hence, the encoder 106 encodes the multi-dimensional feature quantity parameters obtained in step S22 using the clustering result table recorded in the speech communication information holding unit 105 in step S23. That is, the encoder 106 executes scalar quantization for respective dimensions.

Upon encoding, data of each dimension are converted into 4-bit (16-step) data by looking up the clustering result table shown in, e.g., Fig. 7. For example, when the number of dimensions of the parameters is 13, data of each dimension consists of 4 bits, and the analysis cycle is 10 ms, i.e., data are transferred at 100 frames/sec, the data size is:

$$13 \text{ (dimensions)} \times 4 \text{ (bits)} \times 100 \text{ (frames/s)}$$

$$= 5.2 \text{ kbps}$$

In steps S24 and S25, the encoded data is output and received. Upon data transfer, the communication controller 107 of the terminal 100, the communication line, and the communication controller 201 of the server 200 are used, as described above. The communication line 300 can use various wired and wireless communication means as long as they can transfer data.

In the speech recognition process, the process switch 202 connects the communication controller 201 and decoder 204. Hence, the decoder 204 decodes the multi-dimensional feature quantity parameters received by the communication controller 201 using the clustering result table recorded in the speech communication information holding unit 203 in step S26. That is, the respective step numbers are converted into acoustic parameter values (representative values in Fig. 7). As a result of decoding, acoustic parameters are obtained. In step S27, speech recognition is done using the parameters decoded in step S26. This speech recognition is done by the speech recognition unit 205 using an acoustic model held in the acoustic model holding unit 206. Unlike normal speech recognition, no acoustic processor is used. This is because data decoded by the decoder 204 are the acoustic parameters. As an acoustic model, for example, an HMM (Hidden Markov Model) is used. In step S28, the application 207 runs using the speech recognition result obtained by speech recognition in step S27. The application 207 may be installed in either the server 200 or terminal 100, or may be distributed to both the server 200 and terminal 100. When the application 207 runs on the terminal 100 or is distributed, the recognition result, the internal status data of the application, and the like must be transferred using the communication controllers 107 and 201 and the communication line 300.

As described above, according to the first embodiment, the clustering result table adapted to the acoustic state at that time is generated in the initial learning mode, and encoding/decoding is done based on this clustering result table upon speech recognition. Since encoding/decoding is done using the table (clustering result table) adapted to the acoustic state, appropriate encoding can be attained in correspondence with a change in acoustic feature. For this reason, a recognition rate drop due to a change in environment noise can be prevented.

<Second Embodiment>

In the first embodiment, the encoding condition (clustering result table) adapted to the acoustic state is generated, and an encoding/decoding process is executed by sharing this encoding condition between the encoder 106 and decoder 204, thus realizing transmission of appropriate speech data, and a speech recognition process. In the second embodiment, a method of recognizing encoded data without decoding it to attain higher processing speed will be explained.

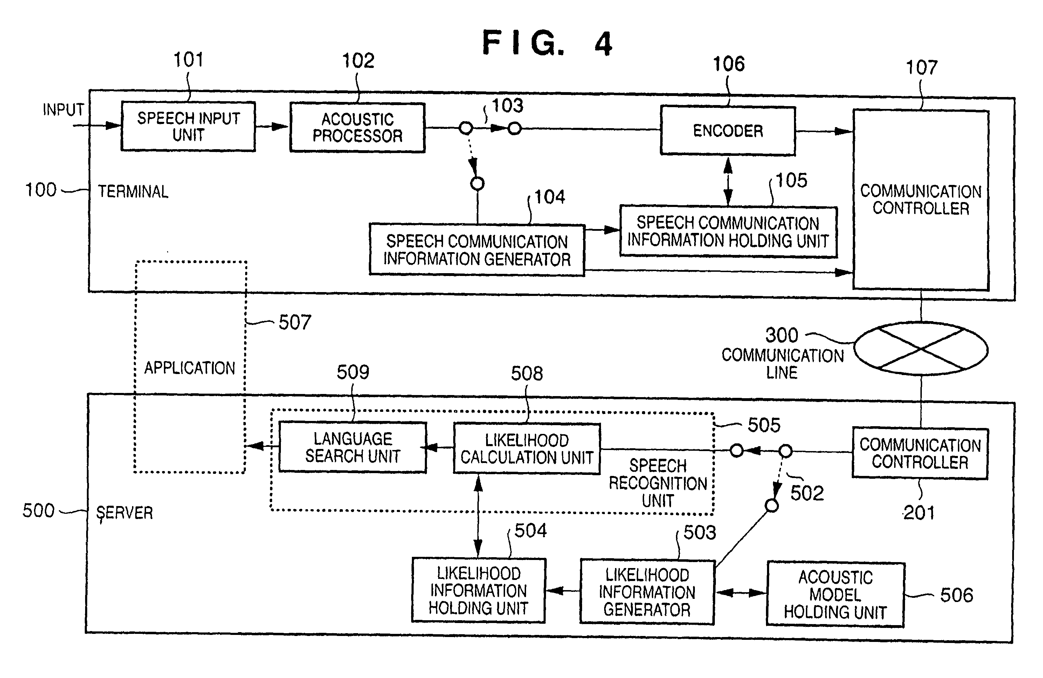

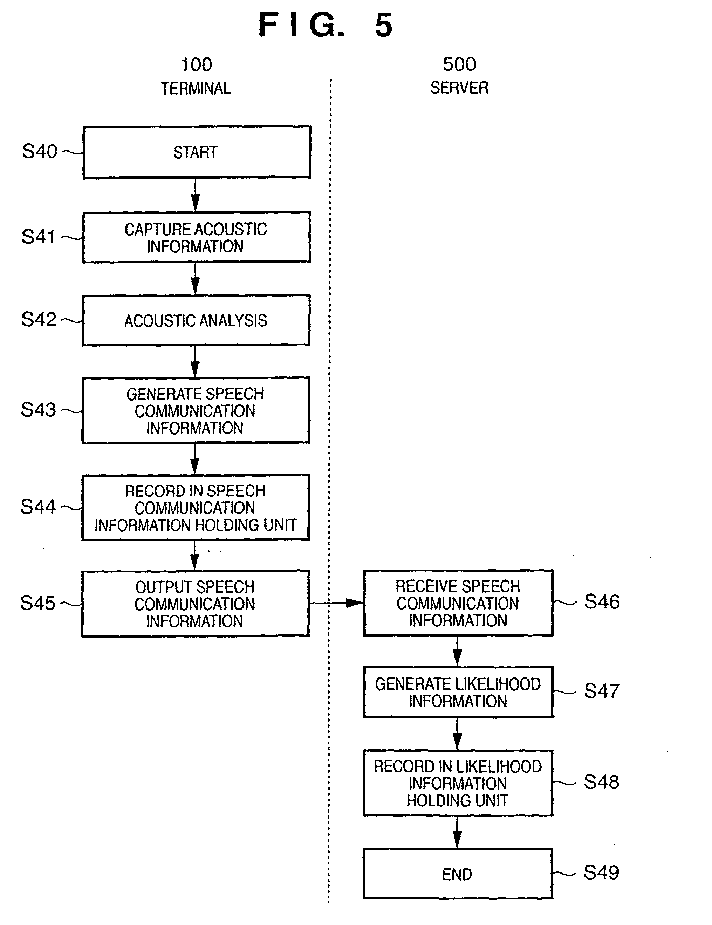

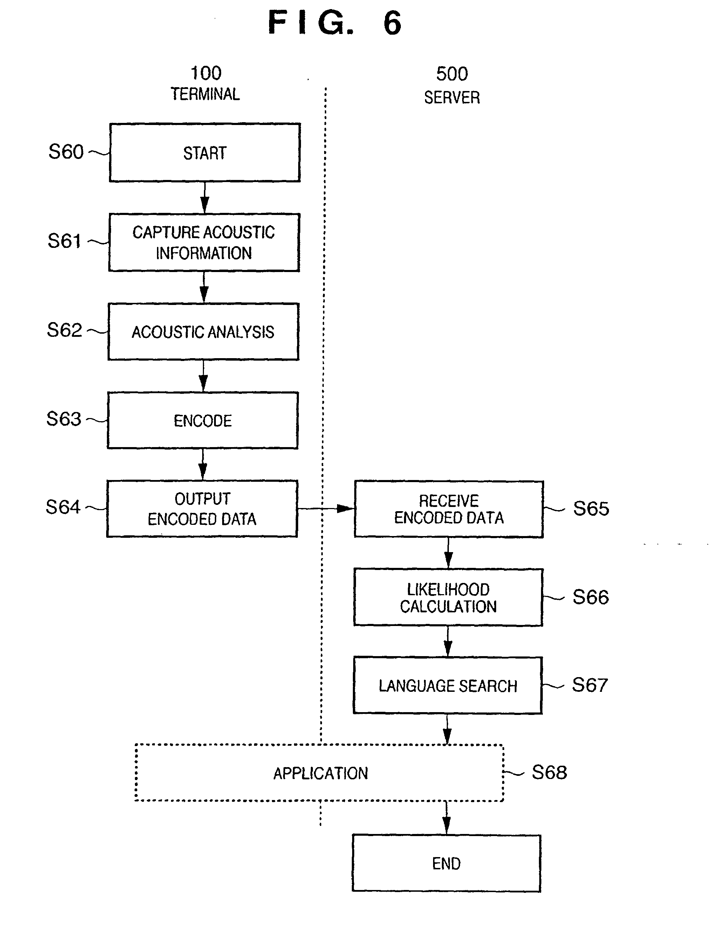

Fig. 4 is a block diagram showing the arrangement of a speech recognition system according to the second embodiment. Figs. 5 and 6 are flow charts for explaining the operation of the speech recognition system shown in the diagram of Fig. 4. The second embodiment will be explained below as well as its operation example while associating Fig. 4 with Figs. 5 and 6.

The same reference numerals in Fig. 4 denote the same parts as in the arrangement of the first embodiment. As can be seen from Fig. 4, the terminal 100 has the same arrangement as in the first embodiment. On the other hand, in a server 500, a process switch 502 connects the communication controller 201 and a likelihood information generator 503 in an initial setup process, and connects the communication controller 201 and a speech recognition unit 505 in a speech recognition process.

Reference numeral 503 denotes a likelihood information generator for generating likelihood information on the basis of the input clustering result table, and an acoustic model held in an acoustic model holding unit 506. The likelihood information generated by the generator 503 allows speech recognition without decoding the encoded data. The likelihood information and its generation method will be described later. Reference numeral 504 denotes a likelihood information holding unit for holding the likelihood information generated by the likelihood information generator 503. Note that various recording media such as a memory (e.g., a RAM), floppy disk (FD), hard disk (HD), and the like can be used to hold the likelihood information in the likelihood information holding unit 504.

Reference numeral 505 denotes a speech recognition unit, which comprises a likelihood calculation unit 508 and language search unit 509. The speech recognition unit 505 executes a speech recognition process of the encoded data input via the communication controller 201 using the likelihood information held in the likelihood information holding unit 504, as will be described later.

The speech recognition process of the second embodiment will be described below with reference to Figs. 5 and 6.

An initial setup process is done before the beginning of speech recognition. As in the first embodiment, the initial setup process is executed to adapt encoded data to an acoustic environment. If this initial setup process is skipped, it is possible to execute encoding and speech recognition of speech data using prescribed values in association with encoded data. However, by executing the initial setup process, the recognition rate can be improved.

Respective processes in steps S40 to S45 in the terminal 100 are the same as those in the first embodiment (steps S1 to S6), and a description thereof will be omitted. The initial setup process of the server 500 will be explained below.

In step S46, the communication controller 201 receives speech communication information (clustering result table in this embodiment) generated by the terminal 100. The process switch 502 connects the likelihood information generator 503 in the initial step process. Hence, likelihood information is generated in step S47. Generation of the likelihood information will be explained below. The likelihood information is generated by the likelihood information generator 503 using an acoustic model held in the acoustic model holding unit 506. This acoustic model is expressed by, e.g., an HMM.

Various likelihood information generation methods are available. In this embodiment, a method using scalar quantization will be explained. As described in the first embodiment, a clustering result table for scalar quantization is obtained for each dimension of the multi-dimensional acoustic parameter by the process of the terminal 100 in steps S40 to S45. Some steps of likelihood calculations are made for respective quantization points using the values of respective quantization points held in this table and the acoustic model. This value is held in the likelihood information holding unit 504. In the recognition process, since the likelihood calculations are made by table lookup on the basis of scalar quantization values received as encoded data, the need for decoding can be obviated.

For further details of such likelihood calculation method by table lookup, refer to Sagayama et. al., "New High-speed Implementation in Speech Recognition", Proc. of ASJ Spring Meeting 1-5-12, 1995. Other vector quantization methods of scalar quantization, a method of omitting additions by making mixed distribution operations of respective dimensions in advance, and the like may be used. These methods are also introduced in the above reference. The calculation result is held in the likelihood information holding unit 504 in the form of a table for scalar quantization values in step S48.

The flow of the speech recognition process according to the second embodiment will be described below with reference to Fig. 6. Respective processes in steps S60 to S64 in the terminal 100 are the same as those in the first embodiment (steps S20 to S24), and a description thereof will be omitted.

In step S65, the communication controller 201 of the server 500 receives encoded data of the multi-dimensional acoustic parameters obtained by the processes in steps S20 to S24. In the speech recognition process, the process switch 502 connects the likelihood calculation unit 508. The speech recognition unit 505 can be separately expressed by likelihood calculation unit 508 and word search unit 509. In step S66, the likelihood calculation unit 508 calculates likelihood information. In this case, the likelihood information is calculated by table lookup for scalar quantization values using the data held in the likelihood information holding unit 504 in place of the acoustic model. Since details of the calculations are described in the above reference, a description thereof will be omitted.

In step S67, the likelihood calculation result in step S66 undergoes a word search to obtain a recognition result. The word search is made using a word dictionary, and a grammar which is normally used in speech recognition such as a network grammar, language model such as n-gram, and the like. In step S68, an application 507 runs using the obtained recognition result. As in the first embodiment, the application 507 may be installed in either the server 500 or terminal 100, or may be distributed to both the server 500 and terminal 100. When the application 507 runs on the terminal 100 or is distributed, the recognition result, the internal status data of the application, and the like must be transferred using the communication controllers 107 and 201 and the communication line 300.

As described above, according to the second embodiment, since speech recognition can be done without decoding the encoded data, high-speed processing can be achieved.

The speech recognition process of the first and second embodiments described above can be used for applications that utilize speech recognition. Especially, the above speech recognition process is suitable for a case wherein a compact portable terminal is used as the terminal 100, and device control and information search are made by means of speech input.

According to the above embodiments, when the speech recognition process is distributed and executed on different devices using encoding for speech recognition, an encoding process is done in accordance with background noise, internal noise, the characteristics of a microphone, and the like. For this reason, even in a noisy environment, or even when a microphone having different characteristics is used, a recognition rate drop can be prevented, and efficient encoding can be implemented, thus obtaining merits (e.g., the transfer data size on a communication path can be suppressed).

Note that the objects of the present invention are also achieved by supplying a storage medium, which records a program code of a software program that can implement the functions of the above-mentioned embodiments to the system or apparatus, and reading out and executing the program code stored in the storage medium by a computer (or a CPU or MPU) of the system or apparatus.

In this case, the program code itself read out from the storage medium implements the functions of the above-mentioned embodiments, and the storage medium which stores the program code constitutes the present invention.

As the storage medium for supplying the program code, for example, a floppy disk, hard disk, optical disk, magneto-optical disk, CD-ROM, CD-R, magnetic tape, nonvolatile memory card, ROM, and the like may be used.

The functions of the above-mentioned embodiments may be implemented not only by executing the readout program code by the computer but also by some or all of actual processing operations executed by an OS (operating system) running on the computer on the basis of an instruction of the program code.

Furthermore, the functions of the above-mentioned embodiments may be implemented by some or all of actual processing operations executed by a CPU or the like arranged in a function extension board or a function extension unit, which is inserted in or connected to the computer, after the program code read out from the storage medium is written in a memory of the extension board or unit.

To restate, according to the present invention, appropriate encoding can be made in correspondence with a change in acoustic feature, and the recognition rate and compression ratio upon encoding can be prevented from lowering due to a change in environmental noise.

As many apparently widely different embodiments of the present invention can be made without departing from the scope thereof, it is to be understood that the invention is not limited to the specific embodiments thereof but only by the appended claims.

**Claims**

1. A speech recognition system comprising:

   input means (100, S2, S21, S41, S61) for inputting acoustic information;
   analysis means (102, S3, S22, S42, S62) for analyzing the acoustic information input by said input means to acquire feature quantity parameters;
   first holding means (103, 104, 105, S4 - S5, S43 - S44) for obtaining and holding initial setup information for encoding on the basis of the feature quantity parameters obtained by said analysis means;
   second holding means (104, 202, 203, 502, 503, 504, 506, S7, S8, S46 - S48) for holding processing information for a speech recognition process in accordance with the initial setup information for encoding;
   conversion means (103, 106, S21 - S23, S61 - S64) for compression-encoding the feature quantity parameters obtained via said input means and said analysis means on the basis of the initial setup information for encoding; and
   recognition means (202, 204, 205, 502, 505, S25 - S27, S65 - S67) for executing speech recognition on the basis of the processing information for speech recognition held by said second holding means, and the feature quantity parameters compression-encoded by said conversion means.

2. The system according to claim 1, wherein said system comprises a first apparatus (100) having said analysis means, said first holding means, and said conversion means, and a second apparatus (200, 500) having said recognition means, and wherein the system further comprises communication means (197, 300, 201) for sending the initial setup information generated by said first holding means and data acquired by said conversion means from the first apparatus to the second apparatus.

3. The system according to claim 1, wherein said second holding means is operable to hold processing information used to decode information converted by said conversion means,
   wherein said recognition means comprises decoding means (204, S26) for decoding the compression-encoded feature quantity parameters by looking up the processing information held in said second holding means; and

wherein said recognition means is operable to execute a speech recognition process on the basis of the feature quantity parameters decoded by said decoding means (205, S27).

4. The system according to claim 2, wherein said second holding means is provided in the second apparatus.

5. The system according to claim 1, wherein said second holding means is operable to hold processing information obtained from some steps of a likelihood calculation (S46 - S48) associated with speech recognition using the initial setup information for encoding an acoustic model, and wherein said recognition means is operable to obtain a speech recognition result by making a likelihood calculation for data acquired by said conversion means using the information held by said second holding means.

6. The system according to claim 1, further comprising mode designation means for selectively executing a learning mode in which said initial setup information and said processing information are obtained and stored in said first and second holding means, and a speech recognition mode in which said conversion means compression - encodes the feature quantity parameters and said recognition means executes speech recognition.

7. The system according to claim 1, wherein said conversion means is operable to scaler-quantize multi-dimensional speech parameters obtained by said analysis means for respective dimensions.

8. The system according to claim 7, wherein the conversion means is operable to use an LBG algorithm to scaler-quantize the speech parameters.

9. The system according to claim 7, wherein during the scaler quantization, the conversion means is operable to assume that the data to be quantized has a Gaussian distribution, and quantizes the data with quantization steps having equal probabilities in the distribution.

10. The system according to claim 7, further comprising setting means which is operable to change a clustering for the scaler quantization on the basis of the feature quantity parameters obtained by said analysis means.

11. A speech recognition method comprising:

an input step (S2, S21, S41, S61) of inputting acoustic information;
an analysis step (S3, S22, S42, S62) of analyzing the acoustic information input in the input step to acquire feature quantity parameters;
a first holding step (S4, S5, S43 - S44) of obtaining initial setup information for encoding on the basis of the feature quantity parameters obtained in the analysis step, and storing the information in first storage means;
a second holding step (S7, S8, S46 - S48) of holding, in second storage means, processing information for a speech recognition process in accordance with the initial setup information for encoding;
a conversion step (S21 - S23, S61 - S64) of compression-encoding the feature quantity parameters obtained via the input step and the analysis step on the basis of the initial setup information for encoding; and
a recognition step (202, 204, 205, 502, 505, S25 - S27, S65 - S67) of executing speech recognition on the basis of the processing information for speech recognition held in said second storage means in the second holding step, and the feature quantity parameters compression-encoded in the conversion step.

12. The method according to claim 11, wherein the analysis step, the first holding step, and the conversion step are performed by a first apparatus (100), wherein the recognition step, is performed by a second apparatus (200, 500), and

wherein the method further comprises a communication step (S6, S7, S45, S46) of sending the initial setup information generated in the first holding step and data acquired in the conversion step from the first apparatus to the second apparatus.

13. The method according to claim 11, wherein the second holding step includes the step of holding, in said second storage means, processing information used to decode information converted in the conversion step,

wherein the recognition step comprises:

a decoding step (S26) of decoding the compression-encoded feature quantity parameters by looking up the processing information held in said second storage means, and

wherein the recognition step includes the step of executing a speech recognition process on the basis of the feature quantity parameters decoded in the decoding step (S27).

14. The method according to claim 12, wherein the second holding step is executed by the second apparatus.

15. The method according to claim 11, wherein the second holding step includes a step of generating likelihood information associated with speech recognition on the basis of the initial setup information for encoding and an acoustic model, and holding the calculation result as the information for speech recognition (S46 - S48), and

wherein the recognition step includes the step of obtaining a speech recognition result by making a likelihood calculation for data acquired in the conversion step using the information held in the second holding step.

16. The method according to claim 11, further comprising a mode designation step of selectively executing a learning mode in which the first and second holding steps are performed, and a speech recognition mode in which the conversion step and the recognition step are performed.

17. The method according to claim 11, wherein the conversion step includes the step of scalar-quantizing multi-dimensional speech parameters obtained in the analysis step for respective dimensions.

18. The method according to claim 17, wherein the scalar quantizing step uses an LBG algorithm.

19. The method according to claim 17, wherein the scalar quantizing step assumes that the data to be quantized has a Gaussian distribution, and quantizes the data with quantization steps having equal probabilities in the distribution.

20. The method according to claim 17, further comprising a step of changing a clustering for the scalar quantization on the basis of the feature quantity parameters obtained by the analysis step.

21. An information processing apparatus comprising:

input means (101) for inputting acoustic information;
analysis means (102) for analyzing the acoustic information input by said input means to acquire feature quantity parameters;
holding means (103, 104, 105) for generating and holding initial setup information for compression-encoding on the basis of the feature quantity parameters obtained by said analysis means;
first communication means (107, S6, S45) for sending the initial setup information generated by said holding means to an external apparatus;
conversion means (106) for compression-encoding the feature quantity parameters of the acoustic information obtained via said input means and said analysis means on the basis of the initial setup information; and
second communication means (107, S24, S64) for sending data obtained by said conversion means to the external apparatus.

22. An information processing apparatus comprising:

first reception means (201, S7, S46) for receiving initial setup information associated with compression-encoding from an external apparatus;
holding means (202, 203, 502, 503, 504, 506, S8, S47, S48) for holding, in a memory, processing information for speech recognition obtained on the basis of the initial setup information received by said first reception means;
second reception means (201, S25, S65) for receiving compression-encoded data from the external apparatus; and
recognition means (202, 204, 205, 502, 505, S26, S27, S66, S67) for executing speech recognition of the data received by said second reception means using the processing information held in said holding means.

23. The apparatus according to claim 22, further comprising:

decoding means (204, S26) for decoding data received by said second reception means using the processing information held in said holding means; and
means (205, S27) for executing a speech recognition process on the basis of feature quantity data decoded by said decoding means.

24. The apparatus according to claim 22, wherein said holding means is operable to generate likelihood information on the basis of the initial setup information received by said first reception means, and a predetermined acoustic model, and is operable to hold the likelihood information in the memory (502 - 504, 506, S47, S48), and

wherein said recognition means is operable to perform speech recognition by performing a likelihood calculation on the basis of data received by said second reception means using the likelihood information held in the memory (508, 509, S66, S67).

25. An information processing method comprising:

an input step (S2, S21, S41, S61) of inputting acoustic information;
an analysis step (S3, S22, S42, S62) of analyzing the acoustic information input in the input step to acquire feature quantity parameters;
a holding step (S4, S5, S43, S44) of generating and holding initial setup information for compression-encoding on the basis of the feature quantity parameters obtained in the analysis step;

a first communication step (S6, S45) of sending the initial setup information generated in the holding step to an external apparatus;

a conversion step (S23, S63) of compression-encoding the feature quantity parameters of the acoustic information obtained via the input step and the analysis step on the basis of the initial setup information; and

a second communication step (S24, S64) of sending data obtained in the conversion step to the external apparatus.

26. An information processing method comprising:

a first reception step (S7, S46) of receiving initial setup information associated with compression-encoding from an external apparatus;

a holding step (S8, S47, S48) of holding, in a memory, processing information for speech recognition obtained on the basis of the initial setup information received in the first reception step;

a second reception step (S25, S65) of receiving compression-encoded data from the external apparatus, and

a recognition step (S26, S27, S66, S67) of executing speech recognition of the data received in the second reception step using the processing information held in the holding step.

27. The method according to claim 26, wherein the recognition step comprises:

a decoding step (S26) of decoding data received in the second reception step using the processing information held in the holding step; and

the step (S27) of executing a speech recognition process on the basis of feature quantity data decoded in the decoding step.

28. The method according to claim 26, further comprising the step of generating likelihood information on the basis of the initial setup information received in the first reception step, and a predetermined acoustic model, and holding the likelihood information in the memory (S47, S48), and

wherein the recognition step includes the step of performing speech recognition by performing a likelihood calculation on the basis of data received in the second reception step using the likelihood information held in the memory (S66, S67).

29. A program for making a computer implement each of the steps of a speech recognition method cited in any one of claims 11 to 20.

30. A program for making a computer implement each of the steps of a speech recognition method cited in any one of claims 25 to 28.

31. A computer readable medium for storing a control program adapted for making a computer execute a speech recognition process when the control program is run on the computer, said speech recognition process comprising:

an input step of inputting acoustic information;

an analysis step of analyzing the acoustic information input in the input step to acquire feature quantity parameters;

a first holding step of obtaining initial setup information for encoding on the basis of the feature quantity parameters obtained in the analysis step, and storing the information in first storage means;

a second holding step of holding, in second storage means, processing information for a speech recognition process in accordance with the initial setup information for encoding;

a conversion step of compression-encoding the feature quantity parameters obtained via the input step and the analysis step on the basis of the initial setup information for encoding; and

a recognition step of executing speech recognition on the basis of the processing information for speech recognition held in said second storage means in the second holding step, and the feature quantity parameters compression-encoded in the conversion step.

32. A computer readable medium for storing a control program adapted making a computer execute a predetermined information process when the control program is run on the computer, said predetermined information process comprising:

an input step of inputting acoustic information;

an analysis step of analyzing the acoustic information input in the input step to acquire feature quantity parameters;

a holding step of generating and holding initial setup information for compression-encoding on the basis of the feature quantity parameters obtained in the analysis step;

a first communication step of sending the initial setup information generated in the holding step to an external apparatus;

a conversion step of compression-encoding the feature quantity parameters of the acoustic information obtained via the input step and the analysis step on the basis of the initial setup information; and
a second communication step of sending data obtained in the conversion step to the external apparatus.

33. A computer readable medium for storing a control program adapted for making a computer execute a speech recognition process when the control program is run on the computer, said speech recognition process comprising:

a first reception step of receiving initial setup information associated with compression-encoding from an external apparatus;

a holding step of holding, in a memory, processing information for speech recognition obtained on the basis of the initial setup information received in the first reception step;

a second reception step of receiving compression-encoded data from the external apparatus; and

a recognition step of executing speech recognition of the data received in the second reception step using the processing information held in the holding setup.

**Patentansprüche**

1. Spracherkennungssystem mit:

einer Eingabeeinrichtung (100, S2, S21, S41, S61) zur Eingabe von akustischen Informationen,

einer Analyseeinrichtung (102, S3, S22, S42, S62) zur Analyse der durch die Eingabeeinrichtung eingegebenen akustischen Informationen, um Merkmalsgrößenparameter zu erhalten,

einer ersten Halteeinrichtung (103, 104, 105, S4 - S5, S43 - S44) zum Erhalten und gespeichert Halten von Anfangseinstellinformationen zur Kodierung auf der Basis der durch die Analyseeinrichtung erhaltenen Merkmalsgrößenparameter,

einer zweiten Halteeinrichtung (104, 202, 203, 502, 503, 504, 506, S7, S8, S46 - S48) zum gespeichert Halten von Verarbeitungsinformationen für ein Spracherkennungsverfahren entsprechend den Anfangseinstellinformationen zur Kodierung,

einer Umwandlungseinrichtung (103, 106, S21- S23, S61 - S64) zur Komprimierungskodierung der durch die Eingabeeinrichtung und die Analyseeinrichtung erhaltenen Merkmalsgrößenparameter auf der Grundlage der Anfangseinstellinformationen zur Kodierung und

einer Erkennungseinrichtung (202, 204, 205, 502, 505, S25 - S27, S65 - S67) zur Ausführung einer Spracherkennung auf der Grundlage der durch die zweite Halteeinrichtung gespeichert gehaltenen Verarbeitungsinformationen zur Spracherkennung und der durch die Umwandlungseinrichtung komprimierungskodierten Merkmalsgrößenparameter.

2. System nach Anspruch 1, wobei das System eine erste Vorrichtung (100) mit der Analyseeinrichtung, der ersten Halteeinrichtung und der Umwandlungseinrichtung und eine zweite Vorrichtung (200, 500) mit der Erkennungseinrichtung umfasst und wobei das System weiterhin eine Übermittlungseinrichtung (197, 300, 201) zum Senden von durch die erste Halteeinrichtung erzeugten Anfangseinstellinformationen und durch die Umwandlungseinrichtung erfassten Daten von der ersten Vorrichtung zur zweiten Vorrichtung umfasst.

3. System nach Anspruch 1, wobei die zweite Halteeinrichtung zur Dekodierung von durch die Umwandlungseinrichtung umgewandelten Informationen verwendete Verarbeitungsinformationen gespeichert halten kann,

wobei die Erkennungseinrichtung eine Dekodiereinrichtung (204, S26) zur Dekodierung der komprimierungskodierten Merkmalsgrößenparameter durch Nachschlagen der in der zweiten Halteeinrichtung gespeichert gehaltenen Verarbeitungsinformationen umfasst, und,

wobei die Erkennungseinrichtung ein Spracherkennungsverfahren auf der Grundlage der durch die Dekodiereinrichtung (205, S27) dekodierten Merkmalsgrößenparameter ausführen kann.

4. System nach Anspruch 2, wobei die zweite Halteeinrichtung in der zweiten Vorrichtung ausgebildet ist.

5. System nach Anspruch 1, wobei die zweite Halteeinrichtung Verarbeitungsinformationen gespeichert halten kann, die aus einigen Schritten einer mit einer Spracherkennung unter Verwendung der Anfangseinstellinformationen zur Kodierung eines akustischen Modells verbundenen Wahrscheinlichkeitsberechnung (S46 - S48) erhalten werden, und wobei die Erkennungseinrichtung ein Spracherkennungsergebnis durch Durchführen einer Wahrscheinlichkeitsberechnung für durch die Umwandlungseinrichtung erhaltenen Daten unter Verwendung der durch die zweite Halteeinrichtung gespeichert gehaltenen Informationen erhalten kann.

6. System nach Anspruch 1, weiterhin mit einer Betriebsartbestimmungseinrichtung zur ausgewählten Ausführung einer Lernbetriebsart, in der die Anfangseinstellinformationen und die Verarbeitungsinformationen erhalten und in der ersten und zweiten Halteeinrichtung gespeichert werden, und einer Spracherkennungsbetriebsart, in der die Umwandlungseinrichtung die Merkmalsgrößenparameter komprimierungskodiert und die Erkennungseinrichtung eine Spracherkennung ausführt.

7. System nach Anspruch 1, wobei die Umwandlungseinrichtung durch die Analyseeinrichtung erhaltene mehrdimensionale Sprachparameter für jeweilige Dimensionen Frequenzteiler-quantisieren kann.

8. System nach Anspruch 7, wobei die Umwandlungseinrichtung einen LGB-Algorithmus verwenden kann, um die Sprachparameter zu Frequenzteiler-quantisieren.

9. System nach Anspruch 7, wobei während der Frequenzteiler-Quantisierung die Umwandlungseinrichtung annehmen kann, dass die zu quantisierenden Daten eine Gauß-Verteilung besitzen, und die Daten mit Quantisierungsschritten mit gleichen Verteilungswahrscheinlichkeiten quantisiert.

10. System nach Anspruch 7, weiterhin mit einer Einstelleinrichtung, die eine Anhäufung für die Frequenzteiler-Quantisierung auf der Grundlage der durch die Analyseeinrichtung erhaltenen Merkmalsgrößenparameter verändern kann.

11. Spracherkennungsverfahren mit:

einem Eingabeschritt (S2, S21, S41, S61) eines Eingebens von akustischen Informationen, einem Analyseschritt (S3, S22, S42, S62) eines Analysierens der in dem Eingabeschritt eingegebenen akustischen Informationen, um Merkmalsgrößenparameter zu erhalten, einem ersten Halteschritt (S4, S5, S43 - S44) eines Erhaltens von Anfangseinstellinformationen zur Kodierung auf der Grundlage der in dem Analyseschritt erhaltenen Merkmalsgrößenparameter und eines Speicherns der Informationen in einer ersten Speichereinrichtung, einem zweiten Halteschritt (S7, S8, S46 - S48) eines gespeichert Haltens von Verarbeitungsinformationen für ein Spracherkennungsverfahren entsprechend den Anfangseinstellinformationen zur Kodierung in einer zweiten Speichereinrichtung, einem Umwandlungsschritt (S21 - S23, S61 - S64) eines Komprimierungskodierens der über den Eingabeschritt und den Analyseschritt auf der Grundlage der Anfangseinstellinformationen zur Kodierung erhaltenen Merkmalsgrößenparameter und einem Erkennungsschritt (202, 204, 205, 502, 505, S25 - S27, S65 - S67) eines Ausführens einer Spracherkennung auf der Grundlage der in der zweiten Speichereinrichtung in dem zweiten Halteschritt gehaltenen Verarbeitungsinformationen zur Spracherkennung und den in dem Umwandlungsschritt komprimierungskodierten Merkmalsgrößenparameter.

12. Verfahren nach Anspruch 11, wobei der Analyseschritt, der erste Halteschritt und der Umwandlungsschritt durch eine erste Vorrichtung (100) durchgeführt werden, wobei der Erkennungsschritt durch eine zweite Vorrichtung (200, 500) durchgeführt wird, und,
wobei das Verfahren weiterhin einen Übermittlungsschritt 8S6, S7, S45, S46) eines Sendens der in dem ersten Halteschritt erzeugten Anfangseinstellinformationen und von in dem Umwandlungsschritt erhaltenen Daten von der ersten Vorrichtung zur zweiten Vorrichtung umfasst.

13. Verfahren nach Anspruch 11, wobei der zweite Halteschritt den Schritt eines gespeichert Haltens von zur Dekodierung von in dem Umwandlungsschritt umgewandelten Informationen verwendeten Verarbeitungsinformationen in der zweiten Speichereinrichtung enthält,
wobei der Erkennungsschritt
einen Dekodierschritt (S26) eines Dekodierens der komprimierungskodierten Merkmalsgrößenparameter durch Nachschlagen der in der zweiten Speichereinrichtung gespeichert gehaltenen Verarbeitungsinformationen umfasst und
wobei der Erkennungsschritt den Schritt eines Ausführens eines Spracherkennungsverfahrens auf der Grundlage der in dem Dekodierschritt dekodierten Merkmalsgrößenparameter enthält (S27).

14. Verfahren nach Anspruch 12, wobei der zweite Halteschritt durch die zweite Vorrichtung ausgeführt wird.

15. Verfahren nach Anspruch 11, wobei der zweite Halteschritt einen Schritt eines Erzeugens von mit Spracherkennung auf der Grundlage der Anfangseinstellinformationen zur Kodierung und eines akustischen Modells verbundenen Wahrscheinlichkeitsinformationen und eines gespeichert Haltens des Berechnungsergebnisses als die Informationen zur Spracherkennung (S46 - S48) enthält, und,
wobei der Erkennungsschritt den Schritt eines Erhaltens eines Spracherkennungsergebnisses durch Durchführen einer Wahrscheinlichkeitsberechung für in dem Umwandlungsschritt erhaltene Daten unter Verwendung der in dem zweiten Halteschritt gespeichert gehaltenen Informationen enthält.

16. Verfahren nach Anspruch 11, weiterhin mit einem Betriebsartbestimmungsschritt eines ausgewählten Ausführens einer Lernbetriebsart, in der die ersten und zweiten Halteschritte durchgeführt werden, und einer Spracherkennungsbetriebsart, in der der Umwandlungsschritt und der Erkennungsschritt durchgeführt werden.

17. Verfahren nach Anspruch 11, wobei der Umwandlungsschritt den Schritt eines Frequenzteiler-Quantisierens von in dem Analyseschritt erhaltenen mehrdimensionalen Sprachparametern für jeweilige Dimensionen enthält.

18. Verfahren nach Anspruch 17, wobei der Frequenzteiler-Quantisierungs-Schritt einen LGB-Algorithmus verwendet.

19. Verfahren nach Anspruch 17, wobei der Frequenzteiler-Quantisierungs-Schritt annimmt, dass die zu quantisierenden Daten eine Gauß' sche Verteilung besitzen, und die Daten mit Quantisierungsschritten mit gleichen Verteilungswahrscheinlichkeiten quantisiert.

20. Verfahren nach Anspruch 17, weiterhin mit einem Schritt eines Veränderns eines Anhäufung für die Frequenzteiler-Quantisierung auf der Grundlage der durch den Analyseschritt erhaltenen Merkmalsgrößenparameter.

21. Informationsverarbeitungsvorrichtung mit:

einer Eingabeeinrichtung (101) zur Eingabe von akustischen Informationen,
einer Analyseeinrichtung (102) zur Analyse der durch die Eingabeeinrichtung eingegebenen akustischen Informationen, um Merkmalsgrößenparameter zu erhalten,
einer Halteeinrichtung (103, 104, 105) zur Erzeugung und zum gespeichert Halten von Anfangseinstellinformationen für eine Komprimierungskodierung auf der Grundlage der durch die Analyseeinrichtung erhaltenen Merkmalsgrößenparameter,
einer ersten Übermittlungseinrichtung (107, S6, S45) zum Senden der durch die Halteeinrichtung erzeugten Anfangseinstellinformationen an eine externe Vorrichtung, einer Umwandlungseinrichtung (106) zur Komprimierungskodierung der Merkmalsgrößenparameter der über die Eingabeeinrichtung und die Analyseeinrichtung erhaltenen akustischen Informationen auf der Grundlage der Anfangseinstellinformationen und
einer zweiten Übermittlungseinrichtung (107, S24, S64) zum Senden von durch die Umwandlungseinrichtung erhaltenen Daten zur externen Vorrichtung.

22. Informationsverarbeitungsvorrichtung mit:

einer ersten Empfangseinrichtung (201, S7, S46) zum Empfang von mit einer Komprimierungskodierung verbundenen Anfangseinstellinformationen von einer externen Vorrichtung, einer Halteeinrichtung (202, 203, 502, 503, 504, 506, S8, S47, S48) zum gespeichert Halten von auf der Grundlage der durch die erste Empfangseinrichtung empfangenen Anfangseinstellinformationen erhaltenen Verarbeitungsinformationen zur Spracherkennung in einer Speichereinrichtung,
einer zweiten Empfangseinrichtung (201, S25, S65) zum Empfang von komprimierungskodierten Daten von der externen Vorrichtung und einer Erkennungseinrichtung (202, 204, 205, 502, 505, S26, S27, S66, S67) zur Ausführung einer Spracherkennung der durch die zweite Empfangseinrichtung empfangenen Daten unter Verwendung der in der Halteeinrichtung gespeichert gehaltenen Verarbeitungsinformationen.

23. Vorrichtung nach Anspruch 22, weiterhin mit:

einer Dekodiereinrichtung (204, S26) zur Dekodierung von durch die zweite Empfangseinrichtung empfangenen Daten unter Verwendung der in der Halteeinrichtung gespeichert gehaltenen Verarbeitungsinformationen und einer Einrichtung (205, S27) zur Ausführung eines Spracherkennungsvorgangs auf der Grundlage von durch die Dekodiereinrichtung dekodierten Merkmalsgrößendaten.

24. Vorrichtung nach Anspruch 22, wobei die Halteeinrichtung Wahrscheinlichkeitsinformationen auf der Grundlage der durch die erste Empfangseinrichtung empfangenen Anfangseinstellinformationen und einem vorbestimmten akustischen Modell erzeugen und die Wahrscheinlichkeitsinformationen in der Speichereinrichtung (502 - 504, 506, S47, S48) gespeichert halten kann und wobei die Erkennungseinrichtung eine Spracherkennung durch Durchführung einer Wahrscheinlichkeitsberechnung auf der Grundlage von durch die zweite Empfangseinrichtung empfangenen Daten unter Verwendung der in der Speichereinrichtung (508, 509, S66, S67) gehaltenen Wahrscheinlichkeitsinformationen durchführen kann.

25. Informationsverarbeitungsverfahren mit:

einem Eingabeschritt (S2, S21, S41, S61) eines Eingebens von akustischen Informationen, einem Analyseschritt (S3, S22, S42, S62) eines Analysierens der in dem Eingabeschritt eingegebenen akustischen Informationen, um Merkmalsgrößenparameter zu erhalten, einem Halteschritt (S4, S5, S43, S44) eines Erzeugens und gespeichert Haltens von Anfangseinstellinformationen zur Komprimierungskodierung auf der Grundlage von in dem Analyseschritt erhaltenen Merkmalsgrößenparametern,
einem ersten Übermittlungsschritt (S6, S45) eines Sendens der in dem Halteschritt erzeugten Anfangseinstellinformationen zu einer externen Vorrichtung,
einem Umwandlungsschritt (S23, S63) eines Komprimierungskodierens der durch den Eingabeschritt und den Analyseschritt erhaltenen Merkmalsgrößenparameter der akustischen Informationen auf der Grundlage der Anfangseinstellinformationen und
einem zweiten Übermittlungsschritt (S24, S64) eines Sendens von in dem Umwandlungsschritt erhaltenen Daten zur externen Vorrichtung.

26. Informationsverarbeitungsverfahren mit:

einem ersten Empfangsschritt (S7, S46) eines Empfangens von mit einer Komprimierungskodierung verbundenen Anfangseinstellinformationen von einer externen Vorrichtung,
einem Halteschritt (S8, S47, S48) eines gespeichert Haltens von auf der Grundlage der in dem ersten Empfangsschritt empfangenen Anfangseinstellinformationen erhaltenen Verarbeitungsinformationen zur Spracherkennung in einer Speichereinrichtung,
einem zweiten Empfangsschritt (S25, S65) eines Empfangens von komprimierungskodierten Daten von der externen Vorrichtung und
einem Erkennungsschritt (S26, S27, S66, S67) eines Ausführens einer Spracherkennung der in dem zweiten Empfangsschritt empfangenen Daten unter Verwendung der in dem Halteschritt gespeichert gehaltenen Verarbeitungsinformationen.

27. Verfahren nach Anspruch 26, wobei der Erkennungsschritt einen Dekodierschritt (S26) eines Dekodierens von in dem zweiten Empfangsschritt empfangenen Daten unter Verwendung der in dem Halteschritt gespeichert gehaltenen Verarbeitungsinformationen umfasst und
dem Schritt (S27) eines Ausführens eines Spracherkennungsverfahrens auf der Grundlage von in dem Dekodierschritt dekodierten Merkmalsgrößendaten umfasst.

28. Verfahren nach Anspruch 26, weiterhin mit dem Schritt eines Erzeugens von Wahrscheinlichkeitsinformationen auf der Grundlage der in dem ersten Empfangsschritt empfangenen Anfangseinstellinformationen und einem vorbestimmten akustischen Modell und eines gespeichert Haltens der Wahrscheinlichkeitsinformationen in der Speichereinrichtung (S47, S48) und,
wobei der Erkennungsschritt den Schritt eines Durchführens einer Spracherkennung durch Durchführen eines Wahrscheinlichkeitsberechnung auf der Grundlage von in dem zweiten Empfangsschritt empfangenen Daten unter Verwendung der in der Speichereinrichtung (S66, S67) gespeichert gehaltenen Wahrscheinlichkeitsinformationen, enthält.

29. Programm zur Veranlassung eines Computers zur Ausführung jedes der Schritte eines Spracherkennungsverfahrens nach einem der Ansprüche 11 bis 20.

30. Programm zur Veranlassung eines Computers zur Ausführung jedes der Schritte eines Spracherkennungsverfahrens nach einem der Ansprüche 25 bis 28.

31. Computerlesbarer Datenträger zur Speicherung eines Steuerprogramms, das angepasst ist, einen Computer ein Spracherkennungsverfahren ausführen zu lassen, wenn das Steuerprogramm auf dem Computer ist, wobei das Spracherkennungsverfahren:

einen Eingabeschritt eines Eingebens von akustischen Informationen,
einen Analyseschritt eines Analysierens der in dem Eingabeschritt eingegebenen akustischen Informationen zum Erhalten von Merkmalsgrößenparametern,
einen ersten Halteschritt eines Erhaltens von Anfangseinstellinformationen zur Kodierung auf der Grundlage der in dem Analyseschritt erhaltenen Merkmalsgrößenparameter und eines Speicherns der Informationen in einer ersten Speichereinrichtung,
einen zweiten Halteschritt eines gespeichert Haltens von Verarbeitungsinformationen für ein Spracherkennungsverfahren entsprechend den Anfangseinstellinformationen zur Kodierung in einer zweiten Speichereinrichtung,
einen Umwandlungsschritt eines Komprimierungskodierens der über den Eingabeschritt und den Analyseschritt erhaltenen Merkmalsgrößenparameter auf der Grundlage der Anfangseinstellinformationen zur Kodierung und
einen Erkennungsschritt eines Ausführens einer Spracherkennung auf der Grundlage der in der zweiten Speichereinrichtung in dem zweiten Halteschritt gespeichert gehaltenen Verarbeitungsinformationen zur Spracherkennung und der in dem Umwandlungsschritt komprimierungskodierten Merkmalsgrößenparameter umfasst.

**32.** Computerlesbarer Datenträger zur Speicherung eines Steuerprogramm, das angepasst ist, einen Computer eine vorbestimmte Informationsverarbeitung ausführen zu lassen, wenn das Steuerprogramm auf dem Computer ist, wobei die vorbestimmte Informationsverarbeitung:

> einen Eingabeschritt eines Eingebens von akustischen Informationen,
> einen Analyseschritt eines Analysierens der in dem Eingabeschritt eingegebenen akustischen Informationen zum Erhalten von Merkmalsgrößenparametern,
> einen Halteschritt eines Erzeugens und gespeichert Haltens von Anfangseinstellinformationen zur Komprimierungskodierung auf der Grundlage der in dem Analyseschritt erhaltenen Merkmalsgrößenparameter,
> einem ersten Übermittlungsschritt eines Sendens der in dem Halteschritt erzeugten Anfangseinstellinformationen an eine externe Vorrichtung,
> einem Umwandlungsschritt eines Komprimierungskodierens der über den Eingabeschritt und den Analyseschritt erhaltenen Merkmalsgrößenparameter der akustischen Informationen auf der Grundlage der Anfangseinstellinformationen und
> einen zweiten Übermittlungsschritt eines Sendens von in dem Umwandlungsschritt erhaltenen Daten an die externe Vorrichtung

umfasst.

**33.** Computerlesbarer Datenträger zur Speicherung eines Steuerprogramms, das angepasst ist, einen Computer ein Spracherkennungsverfahren ausführen zu lassen, wenn das Steuerprogramm auf dem Computer ist, wobei der Spracherkennungsvorgang:

> einen ersten Empfangsschritt eines Empfangens von mit einer Komprimierungskodierung verbundenen Anfangseinstellinformationen von einer externen Vorrichtung,
> einen Halteschritt eines gespeichert Haltens von auf der Grundlage der in dem ersten Empfangsschritt empfangenen Anfangseinstellinformationen erhaltenen Verarbeitungsinformationen zur Spracherkennung in einer Speichereinrichtung,
> einem zweiten Empfangsschritt zum Empfangen von komprimierungskodierten Daten von der externen Vorrichtung und
> einem Erkennungsschritt eines Ausführens einer Spracherkennung der in dem zweiten Empfangsschritt empfangenen Daten unter Verwendung der in dem Halteschritt gespeichert gehaltenen Verarbeitungsinformationen umfasst.

## Revendications

**1.** Système de reconnaissance de la parole comprenant :

> un moyen d'entrée (100, S2, S21, S41, S61) pour fournir en entrée des informations acoustiques ;
> un moyen d'analyse (102, S3, S22, S42, S62) pour analyser les informations acoustiques fournies en entrée par ledit moyen d'entrée afin d'acquérir des paramètres de grandeurs caractéristiques ;
> un premier moyen de maintien (103, 104, 105, S4-S5, S43-S44) pour obtenir et maintenir des informations de configuration initiales destinées à un codage sur la base des paramètres de grandeurs caractéristiques obtenus par ledit moyen d'analyse;
> un second moyen de maintien (104, 202, 203, 502, 503, 504, 506, S7, S8, S46-S48) pour maintenir des informations de traitement destinées à un traitement de reconnaissance de la parole en conformité avec les informations de configuration initiales destinées au codage;
> un moyen de conversion (103, 106, S21-S23, S61-S64) pour coder avec compression les paramètres de grandeurs caractéristiques obtenus par l'intermédiaire dudit moyen d'entrée et dudit moyen d'analyse sur la base des informations de configuration initiales destinées au codage ; et
> un moyen de reconnaissance (202, 204, 205, 502, 505, S25-S27, S65-S67) pour exécuter une reconnaissance de la parole sur la base des informations de traitement destinées à la reconnaissance de la parole maintenues par ledit second moyen de maintien, et des paramètres de grandeurs caractéristiques codés avec compression par ledit moyen de conversion.

**2.** Système selon la revendication 1, dans lequel ledit système comprend un premier appareil (100) ayant ledit moyen d'analyse, ledit premier moyen de maintien, et ledit moyen de conversion, et un second appareil (200, 500) ayant ledit moyen de reconnaissance, et dans lequel le système comprend en outre un moyen de communication (197, 300, 201) pour envoyer les informations de configuration initiales générées par ledit premier moyen de maintien et des données acquises par ledit moyen de conversion, du premier appareil au second appareil.

3. Système selon la revendication 1, dans lequel ledit second moyen de maintien a pour fonction de maintenir des informations de traitement utilisées pour décoder des informations converties par ledit moyen de conversion,

dans lequel ledit moyen de reconnaissance comprend un moyen de décodage (204, S26) pour décoder les paramètres de grandeurs de caractéristiques codés avec compression en consultant les informations de traitement maintenues dans ledit second moyen de maintien ; et

dans lequel ledit moyen de reconnaissance a pour fonction d'exécuter un traitement de reconnaissance de la parole sur la base des paramètres de grandeurs caractéristiques décodés par ledit moyen de décodage (205, S27).

4. Système selon la revendication 2, dans lequel ledit second moyen de maintien est prévu dans le second appareil.

5. Système selon la revendication 1, dans lequel ledit second moyen de maintien a pour fonction de maintenir des informations de traitement obtenues à partir de certaines étapes d'un calcul de vraisemblance (S46-S48) associé à la reconnaissance de la parole en utilisant les informations de configuration initiales pour coder un modèle acoustique, et dans lequel ledit moyen de reconnaissance a pour fonction d'obtenir un résultat de reconnaissance de la parole en effectuant un calcul de vraisemblance pour des données acquises par ledit moyen de conversion en utilisant les informations maintenues par ledit second moyen de maintien.

6. Système selon la revendication 1, comprenant en outre un moyen de désignation de mode pour exécuter sélectivement un mode d'apprentissage dans lequel lesdites informations de configuration initiales et lesdites informations de traitement sont obtenues et stockées dans lesdits premier et second moyens de maintien, et un mode de reconnaissance de la parole dans lequel ledit moyen de conversion code avec compression les paramètres de grandeurs caractéristiques et ledit moyen de reconnaissance exécute une reconnaissance de la parole.

7. Système selon la revendication 1, dans lequel ledit moyen de conversion a pour fonction de quantifier de façon scalaire des paramètres de parole multidimensionnels obtenus par ledit moyen d'analyse pour des dimensions respectives.

8. Système selon la revendication 7, dans lequel le moyen de conversion a pour fonction d'utiliser un algorithme LBG pour quantifier de façon scalaire les paramètres de parole.

9. Système selon la revendication 7, dans lequel, pendant la quantification scalaire, le moyen de conversion a pour fonction de. supposer que les données à quantifier ont une distribution Gaussienne, et quantifie les données avec des pas de quantification ayant des probabilités égales dans la distribution.

10. Système selon la revendication 7, comprenant en outre un moyen de réglage qui a pour fonction de modifier une agrégation destinée à la quantification scalaire sur la base des paramètres de grandeurs caractéristiques obtenus par ledit moyen d'analyse.

11. Procédé de reconnaissance de la parole, comprenant :

une étape d'entrée (S2, S21, S41, S61) consistant à fournir en entrée des informations acoustiques ;

une étape d'analyse (S3, S22, S42, S62) consistant à analyser les informations acoustiques fournies en entrée lors de l'étape d'entrée pour acquérir des paramètres de grandeurs caractéristiques ;

une première étape de maintien (S4, S5, S43-S44) consistant à obtenir des informations de configuration initiales pour effectuer un codage sur la base des paramètres de grandeurs caractéristiques obtenus lors de l'étape d'analyse et à stocker les informations dans un premier moyen de stockage ;

une seconde étape de maintien (S7, S8, S46-S48) consistant à maintenir, dans un second moyen de stockage, des informations de traitement pour un traitement de reconnaissance de la parole conformément aux informations de configuration initiales destinées au codage ;

une étape de conversion (S21-523, S61-S64) consistant à coder avec compression les paramètres de grandeurs caractéristiques obtenus par l'intermédiaire de l'étape d'entrée et de l'étape d'analyse sur la base des informations de configuration initiales destinées au codage ; et

une étape de reconnaissance (202, 204, 205, 502, 505, S25-S27, S65-S67) consistant à exécuter une reconnaissance de la parole sur la base des informations de traitement destinées à la reconnaissance de la parole maintenues dans ledit second moyen de stockage lors de la seconde étape de maintien, et des paramètres de grandeurs caractéristiques codés avec compression lors de l'étape de conversion.

**12.** Procédé selon la revendication 11, dans lequel l'étape d'analyse, la première étape de maintien, et l'étape de conversion sont effectuées par un premier appareil (100), dans lequel l'étape de reconnaissance est effectuée par un second appareil (200, 500), et

dans lequel le procédé comprend en outre une étape de communication (S6, S7, S45, S46) consistant à envoyer les informations de configuration initiales générées lors de la première étape de maintien et des données acquises lors de l'étape de conversion, du premier appareil au second appareil.

**13.** Procédé selon la revendication 11, dans lequel la seconde étape de maintien comprend l'étape consistant à maintenir, dans ledit second moyen de stockage, des informations de traitement utilisées pour décoder des informations converties lors de l'étape de conversion,

dans lequel l'étape de reconnaissance comprend :

une étape de décodage (S26) consistant à décoder les paramètres de grandeurs caractéristiques codés avec compression en consultant les informations de traitement maintenues dans ledit second moyen de stockage, et

dans lequel l'étape de reconnaissance comprend l'étape consistant à exécuter un traitement de reconnaissance de la parole sur la base des paramètres de grandeurs caractéristiques décodés lors de l'étape de décodage (S27).

**14.** Procédé selon la revendication 12, dans lequel la seconde étape de maintien est exécutée par le second appareil.

**15.** Procédé selon la revendication 11, dans lequel la seconde étape de maintien comprend une étape consistant à générer des informations de vraisemblance associées à la reconnaissance de la parole sur la base des informations de configuration initiales destinées au codage et d'un modèle acoustique, et à maintenir le résultat du calcul en tant qu'informations destinées à la reconnaissance de la parole (S46-S48), et

dans lequel l'étape de reconnaissance comprend l'étape consistant à obtenir un résultat de reconnaissance de la parole en effectuant un calcul de vraisemblance pour des données acquises lors de l'étape de conversion en utilisant les informations maintenues lors de la seconde étape de maintien.

**16.** Procédé selon la revendication 11, comprenant en outre une étape de désignation de mode consistant à exécuter sélectivement un mode d'apprentissage dans lequel sont effectuées les première et seconde étapes de maintien, et un mode de reconnaissance de la parole dans lequel sont effectuées l'étape de conversion et l'étape de reconnaissance.

**17.** Procédé selon la revendication 11, dans lequel l'étape de conversion comprend l'étape consistant à quantifier de façon scalaire des paramètres de parole multidimensionnels obtenus lors de l'étape d'analyse pour des dimensions respectives.

**18.** Procédé selon la revendication 17, dans lequel l'étape de quantification scalaire utilise un algorithme LBG.

**19.** Procédé selon la revendication 17, dans lequel l'étape de quantification scalaire suppose que les données à quantifier ont une distribution Gaussienne et quantifie les données avec des pas de quantification ayant des probabilités égales dans la distribution.

**20.** Procédé selon la revendication 17, comprenant en outre une étape consistant à modifier une agrégation destinée à la quantification scalaire sur la base des paramètres de grandeurs caractéristiques obtenus par l'étape d'analyse.

**21.** Appareil de traitement d'informations, comprenant :

un moyen d'entrée (101) pour fournir en entrée des informations acoustiques ;
un moyen d'analyse (102) pour analyser les informations acoustiques fournies en entrée par ledit moyen d'entrée afin d'acquérir des paramètres de grandeurs caractéristiques ;
un moyen de maintien (103, 104, 105) pour générer et maintenir des informations de configuration initiales destinées à un codage avec compression sur la base des paramètres de grandeurs caractéristiques obtenus par ledit moyen d'analyse ;
un premier moyen de communication (107, S6, S45) pour envoyer les informations de configuration initiales générées par ledit moyen de maintien à un appareil externe ;
un moyen de conversion (106) pour coder avec compression les paramètres de grandeurs caractéristiques des informations acoustiques obtenues par l'intermédiaire dudit moyen d'entrée et dudit moyen d'analyse sur la base des informations de configuration initiales ; et
un second moyen de communication (107, S24, S64) pour envoyer des données obtenues par ledit moyen de conversion à l'appareil externe.

**22.** Appareil de traitement d'informations, comprenant:

un premier moyen de réception (201, S7, S46) pour recevoir d'un appareil externe des informations de configuration initiales associées à un codage avec compression ;

un moyen de maintien (202, 203, 502, 503, 504, 506, S8, S47, S48) pour maintenir dans une mémoire des informations de traitement destinées à la reconnaissance de la parole obtenues sur la base des informations de configuration initiales reçues par ledit premier moyen de réception ;

un second moyen de réception (201, S25, S65) pour recevoir de l'appareil externe des données codées avec compression ; et

un moyen de reconnaissance (202, 204, 205, 502, 505, S26, S27, S66, S67) pour exécuter une reconnaissance de la parole des données reçues par ledit second moyen de réception en utilisant les informations de traitement maintenues dans ledit moyen de maintien.

**23.** Appareil selon la revendication 22, comprenant en outre:

un moyen de décodage (204, S26) pour décoder des données reçues par ledit second moyen de réception en utilisant les informations de traitement maintenues dans ledit moyen de maintien ; et

un moyen (205, S27) pour exécuter un traitement de reconnaissance de la parole sur la base de données de grandeurs caractéristiques décodées par ledit moyen de décodage.

**24.** Appareil selon la revendication 22, dans lequel ledit moyen de maintien a pour fonction de générer des informations de vraisemblance sur la base des informations de configuration initiales reçues par ledit premier moyen de réception, et d'un modèle acoustique prédéterminé, et a pour fonction de maintenir les informations de vraisemblance dans la mémoire (502-504, 506, S47, S48), et

dans lequel ledit moyen de reconnaissance a pour fonction d'effectuer une reconnaissance de la parole en effectuant un calcul de vraisemblance sur la base de données reçues par ledit second moyen de réception en utilisant les informations de vraisemblance maintenues dans la mémoire (508, 509, S66, S67).

**25.** Procédé de traitement d'informations, comprenant :

une étape d'entrée (S2, S21, S41, S61) consistant à fournir en entrée des informations acoustiques ;

une étape d'analyse (S3, S22, S42, S62) consistant à analyser les informations acoustiques fournies en entrée lors de l'étape d'entrée pour acquérir des paramètres de grandeurs caractéristiques ;

une étape de maintien (S4, S5, S43, S44) consistant à générer et à maintenir des informations de configuration initiales pour effectuer un codage avec compression sur la base des paramètres de grandeurs caractéristiques obtenus lors de l'étape d'analyse ;

une première étape de communication (S6, S45) consistant à envoyer les informations de configuration initiales générées lors de l'étape de maintien à un appareil externe ;

une étape de conversion (S23, S63) consistant à coder par compression les paramètres de grandeurs caractéristiques des informations acoustiques obtenus par l'intermédiaire de l'étape d'entrée et de l'étape d'analyse sur la base des informations de configuration initiales ; et

une seconde étape de communication (S24, S64) consistant à envoyer des données obtenues lors de l'étape de conversion à l'appareil externe.

**26.** Procédé de traitement d'informations, comprenant :

une première étape de réception (S7, S46) consistant à recevoir d'un appareil externe des informations de configuration initiales associées à un codage avec compression ;

une étape de maintien (S8, S47, S48) consistant à maintenir dans une mémoire des informations de traitement destinées à la reconnaissance de la parole obtenues sur la base des informations de configuration initiales reçues lors de la première étape de réception ;

une seconde étape de réception (S25, S65) consistant à recevoir de l'appareil externe des données codées avec compression, et

une étape de reconnaissance (S26, S27, S66, S67) consistant à exécuter une reconnaissance de la parole des données reçues lors de la seconde étape de réception en utilisant les informations de traitement maintenues lors de l'étape de maintien.

**27.** Procédé selon la revendication 26, dans lequel l'étape de reconnaissance comprend :

une étape de décodage (S26) consistant à décoder des données reçues lors de la seconde étape de réception en utilisant les informations de traitement maintenues lors de l'étape de maintien ; et

l'étape (S27) consistant à exécuter un traitement de reconnaissance de la parole sur la base de données de grandeurs caractéristiques décodées lors de l'étape de décodage.

28. Procédé selon la revendication 26, comprenant en outre l'étape consistant à générer des informations de vraisemblance sur la base des informations de configuration initiales reçues lors de la première étape de réception, et d'un modèle acoustique prédéterminé, et à maintenir les informations de vraisemblance dans la mémoire (S47, S48), et

dans lequel l'étape de reconnaissance comprend l'étape consistant à effectuer une reconnaissance de la parole en effectuant un calcul de vraisemblance sur la base de données reçues lors de la seconde étape de réception en utilisant les informations de vraisemblance maintenues dans la mémoire (S66, S67).

29. Programme consistant à implanter sur ordinateur chacune des étapes d'un procédé de reconnaissance de la parole selon l'une quelconque des revendications 11 à 20.

30. Procédé consistant à implanter sur ordinateur chacune des étapes d'un procédé de reconnaissance de la parole selon l'une quelconque des revendications 25 à 28.

31. Support lisible par ordinateur pour stocker un programme de commande conçu pour faire en sorte qu'un ordinateur exécute un traitement de reconnaissance de la parole lorsque le programme de commande est exécuté sur l'ordinateur, ledit traitement de reconnaissance de la parole comprenant :

une étape d'entrée consistant à fournir en entrée des informations acoustiques;
une étape d'analyse consistant à analyser les informations acoustiques fournies en entrée lors de l'étape d'entrée pour acquérir des paramètres de grandeurs caractéristiques ;
une première étape de maintien consistant à obtenir des informations de configuration initiales pour effectuer un codage sur la base des paramètres de grandeurs caractéristiques obtenus lors de l'étape d'analyse, et à stocker les informations dans un premier moyen de stockage;
une seconde étape de maintien consistant à maintenir, dans un second moyen de stockage, des informations de traitement destinées à un traitement de reconnaissance de la parole en conformité avec les informations de configuration initiales destinées au codage ;
une étape de conversion destinée à effectuer un codage avec compression des paramètres de grandeurs caractéristiques obtenus par l'intermédiaire de l'étape d'entrée et de l'étape d'analyse sur la base des informations de configuration initiales destinées au codage ; et
une étape de reconnaissance consistant à exécuter une reconnaissance de la parole sur la base des informations de traitement destinées à la reconnaissance de la parole maintenues dans ledit second moyen de stockage lors de la seconde étape de maintien, et des paramètres de grandeurs caractéristiques codés avec compression lors de l'étape de conversion.

32. Support lisible par ordinateur pour stocker un programme de commande conçu pour faire en sorte qu'un ordinateur exécute un traitement d'informations prédéterminé lorsque le programme de commande est exécuté sur l'ordinateur, ledit traitement d'informations prédéterminé comprenant:

une étape d'entrée consistant à fournir en entrée des informations acoustiques ;
une étape d'analyse consistant à analyser les informations acoustiques fournies en entrée lors de l'étape d'entrée pour acquérir des paramètres de grandeurs caractéristiques ;
une étape de maintien consistant à générer et à obtenir des informations de configuration initiales pour effectuer un codage avec compression sur la base des paramètres de grandeurs caractéristiques obtenus lors de l'étape d'analyse ;
une première étape de communication consistant à envoyer à un appareil externe les informations de configuration initiales générées lors de l'étape de maintien ;
une étape de conversion consistant à effectuer un codage avec compression des paramètres de grandeurs caractéristiques des informations acoustiques obtenues par l'intermédiaire de l'étape d'entrée et de l'étape d'analyse sur la base des informations de configuration initiales ; et
une seconde étape de communication consistant à envoyer à l'appareil externe des données obtenues lors de l'étape de conversion.

33. Support lisible par ordinateur pour stocker un programme de commande conçu pour faire en sorte qu'un ordinateur exécute un traitement de reconnaissance de la parole lorsque le programme de commande est exécuté sur l'ordinateur, ledit traitement de reconnaissance de la parole comprenant :

une première étape de réception consistant à recevoir d'un appareil externe des informations de configuration initiales associées au codage avec compression;
une étape de maintien consistant à maintenir dans une mémoire des informations de traitement destinées à la reconnaissance de la parole obtenues sur la base des informations de configuration initiales reçues lors de la première étape de réception ;

une seconde étape de réception consistant à recevoir de l'appareil externe des données codées avec compression ; et

une étape de reconnaissance consistant à exécuter une reconnaissance de la parole des données reçues lors de la seconde étape de réception en utilisant les informations de traitement maintenues lors de l'étape de maintien.

FIG. 1

# F I G. 2

100
TERMINAL

200
SERVER

S1 — **START**

S2 — **CAPTURE ACOUSTIC INFORMATION**

S3 — **ACOUSTIC ANALYSIS**

S4 — **GENERATE SPEECH COMMUNICATION INFORMATION**

S5 — **RECORD IN SPEECH COMMUNICATION INFORMATION HOLDING UNIT**

S6 — **OUTPUT SPEECH COMMUNICATION INFORMATION**

**RECEIVE SPEECH COMMUNICATION INFORMATION** — S7

**RECORD IN SPEECH COMMUNICATION INFORMATION HOLDING UNIT** — S8

**END** — S9

# FIG. 3

100
TERMINAL

200
SERVER

S20 — START

S21 — CAPTURE ACOUSTIC INFORMATION

S22 — ACOUSTIC ANALYSIS

S23 — ENCODE

S24 — OUTPUT ENCODED DATA

RECEIVE ENCODED DATA — S25

DECODE — S26

SPEECH RECOGNITION — S27

APPLICATION — S28

END

# FIG. 4

# F I G.  5

# F I G. 6

# FIG. 7

| STEP | PARAMETER VALUE RANGE | REPRESENTATIVE VALUE |
|:---:|:---:|:---:|
| 0 | | |
| 1 | | |
| 2 | | |
| 3 | | |
| ⋮ | | |
| 15 | | |